# EUROPÄISCHE PATENTSCHRIFT

(11) **EP 2 992 233 B1**
(45) Veröffentlichungstag und Bekanntmachung des Hinweises auf die Patenterteilung: **28.12.2016**
(21) Anmeldenummer: 14714579.1
(22) Anmeldetag: 27.02.2014
(51) Int. Cl.: F16C 35/073, F16C 41/00, F16M 11/06

(54) **DREHVERBINDUNG**
ROTARY JOINT
ASSEMBLAGE ROTATIF

(30) Priorität: 29.04.2013 DE 102013207783
(43) Veröffentlichungstag der Anmeldung: 09.03.2016
(73) Patentinhaber: Schaeffler Technologies AG & Co. KG, 91074 Herzogenaurach (DE)
(72) Erfinder: DREIZLER, Stephan, 91463 Dietersheim (DE); BAUER, Jörg, 91056 Erlangen (DE)
(86) Internationale Anmeldenummer: PCT/DE2014/200094
(87) Internationale Veröffentlichungsnummer: WO 2014/177141

(56) Entgegenhaltungen:
- EP-A1- 2 325 541
- EP-A2- 2 096 349
- DE-A1- 19 805 208
- DE-A1-102007 057 780
- DE-C1- 19 963 512

## Beschreibung

### Gebiet der Erfindung

Die Erfindung befasst sich mit Drehverbindungen, insbesondere mit der Gestaltung der Wegbegrenzung solcher Drehverbindungen.

Eine Drehverbindung ist etwa aus DE 102007057780 bekannt und umfasst im wesentlichen einen Lagerinnenring, der koaxial von einem Lageraußenring umgeben ist. Zwischen Lagerinnenring und Lageraußenring sind Wälzkörper angeordnet.

Soll die gegenseitige Verdrehung zwischen Lagerinnenring und Lageraußenring auf einen vorgegebenen Verdrehwinkel begrenzt werden, ist es üblich, eine sogenannte Wegbegrenzung vorzusehen. Allgemein wird diese Wegbegrenzung von einer runden, etwa am Außenmantel des Lagerinnenrings vorgesehenen Laufbahn realisiert. Diese Laufbahn wird mittels einem oder zwei Anschlägen versehen. In diese Laufbahn ragt eine, in diesem Falle am Innenmantel des Lageraußenrings, angebrachte Nase. Ist die Laufbahn mit zwei Anschlägen versehen, wird die freie Verdrehung von Lagerinnenring und Lageraußenring begrenzt, da die Nase in den Ringraum zwischen zwei Anschlägen eingreift und nur zwischen diesen Anschlägen bewegt werden kann. Wie leicht einzusehen ist, kann durch die gegenseitige Beabstandung der beiden Anschläge der gewünschte Verdrehwinkel sehr leicht eingestellt werden. Soll eine gegenseitige Verdrehung von nahezu 360° realisiert werden, ist es ausreichend, nur einen Anschlag vorzusehen. In diesem Fall wird der Verdrehwinkel weitgehend von der Breite des einen Anschlags in Umfangsrichtung bestimmt.

Für sich ist auch bekannt, Drehverbindungen mit Bremsen zu versehen, die für ein momentanes Blockieren der Verdrehung von Lageraußenring gegenüber dem Lagerinnenring sorgen. In der genannten Schrift ist dis so realisiert, dass an der einen Stirnseite des Lageraußenrings eine Bremsscheibe vorgesehen ist, welche mit einem Bremsklotz zusammenwirkt, der an der Stirnseite des Lagerinnenrings angebracht ist, die in die gleiche Richtung wie die Stirnseite des Lagerinnenrings weist und der von einem Elektromagneten in Richtung der Drehachse gegen die Bremsscheibe oder von dieser weg bewegt werden kann.

Als nachteilig wird allerdings bei Drehverbindungen mit Wegbegrenzungen empfunden, dass durch die Anschläge nur Verdrehwinkel von unter 360° realisierbar sind. Dies bedeutet eine erhebliche Einschränkung der Nutzung. Liegt beispielsweise die Nase am Anschlag an, was für diese Betrachtung einem Verdrehwinkel von 360° entsprechen soll, kann wegen der Wirkung des Anschlags nicht durch Weiterdrehen ein gewünschter Verdrehwinkel etwa von 400° realisiert werden. Vielmehr muss zur Realisierung des gewünschten Verdrehwinkels von 400° ausgehend von der 360° Position über einen großen Verdrehwinkel von 320° zurückgedreht werden.

Die Druckschrift DE 199 63 512 C1 zeigt eine Drehverbindung gemäß der Präambel des Anspruchs 1.

### J Aufgabe der Erfindung

Daher liegt der Erfindung die Aufgabe zugrunde, eine Drehverbindung anzugeben, welche diese Nachteile bei der Nutzung überwindet.

### Zusammenfassung der Erfindung

Diese Aufgabe wird mit den in Anspruch 1 angegebenen Merkmalen gelöst. Vorteilhafte Aus- und Weiterbildungen sind den Ansprüchen 2 und 3 entnehmbar.

Wird die Laufbahn spiralförmig ausgebildet, können auch Verdrehwinkel über 360° realisiert werden, da durch diese Ausgestaltung der Laufbahn die bei rein kreisförmigen Laufbahnen bestehenden Beschränkungen entfallen.

Nur der Vollständigkeit halber sei darauf hingewiesen, dass unter einer spiralförmigen Laufbahn im Sinne dieser Anmeldung Laufbahnen verstanden werden, die sich entweder in Richtung der Drehachse der Drehverbindung oder auch quer dazu erstrecken.

Erstreckt sich die spiralförmige Laufbahn jedoch in Richtung der Drehachse der Drehverbindung, sind weitere Vorteile gegeben. Dies insbesondere dann, wenn die Drehverbindung mit einer Bremseinrichtung versehen ist, bei welcher eine der beiden Stirnseiten des Lageraußenrings mit einer Bremsscheibe und diejenige Stirnseite der beiden Stirnseiten des Lagerinnenrings, welche in die gleiche Richtung entlang der Drehachse wie die mit der Bremsscheibe versehenen Stirnseite des Lageraußenring weist, einen gegen die Bremsscheibe verschiebbaren Bremsklotz umfasst. Ist nämlich die Drehverbindung mit der an den jeweiligen Stirnseiten angebrachten Bremseinrichtung versehen, sind im Gegensatz zu einer sich in Radialrichtung erstreckenden Ausdehnung der spiralförmigen Laufbahn bei einer axialen Ausdehnung der spiralförmigen Laufbahn keine konstruktiven Eingriffe in die Bremseinrichtung mehr erforderlich. Insbesondere ist es möglich, die gleiche Bremseinrichtung bei im Verdrehwinkel begrenzten und im Verdrehwinkel unbegrenzten Drehverbindungen gleichermaßen einzusetzen, was die Lagerhaltung erheblich vereinfacht.

Ein hohes Maß an Flexibilität in Bezug auf die Einstellung der Verdrehwinkel ist dann erreicht, wenn die Laufbahn mit einer Mehrzahl von Gewindebohrungen versehen ist und die Anschläge in die Gewindebohrungen einschraubbar sind.

### Kurze Beschreibung der Figuren

- Fig. 1: ein Detail einer Drehverbindung mit Bremsfunktion;
- Fig. 2: eine Drehverbindung mit Bremsfunktion; und
- Fig. 3: eine Seitenansicht eines Lagerinnenrings gemäß Fig. 2

### Detaillierte Beschreibung der Figuren

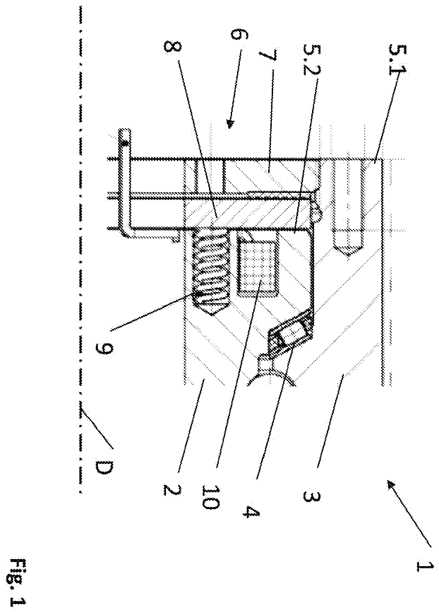

Das Detail der in Fig. 1 gezeigten Drehverbindung 1, wird im Wesentlichen von einem Lagerinnenring 2 und einem Lageraußenring 3, wobei der Lageraußenring 3 den Lagerinnenring 2 koaxial umgibt. Zwischen Lagerinnenring 2 und Lageraußenring 3 wälzen Wälzkörper 4 ab.

Die Stirnseiten 5.1 und 5.2 von Lagerinnenring 2 und Lageraußenring 3, die entlang der Drehachse D in Fig. 1 nach links weisen, sind mit einer Bremsanordnung 6 versehen. Diese Bremseinrichtung 6 wird im Wesentlichen von einer Bremsscheibe 7, welche mit der Stirnseite 5.1 des Lageraußenrings 3 verbunden ist, und einem Bremsklotz 8 gebildet, der in axialer Richtung beweglich vor der Stirnseite 5.2 des Lagerinnenrings 2 angeordnet ist. Ferner ist eine Feder 9 vorgesehen, welche in den Lagerinnenring 2 einlassen ist und die den Bremsklotz 8 gegen die Bremsscheibe 7 drückt. Soll der Reibschluss zwischen Bremsscheibe 7 und Bremsklotz 8 ausgehoben werden, wird ein ebenfalls in die Stirnseite 5.2 des Lagerinnenrings 2 eingelassener Elektromagnet 10 bestromt, der dann auf den zumindest teilweise aus ferromagnetischem Material gebildete Bremsklotz 8 wirkt und diesen in Fig. 1 nach rechts bewegt.

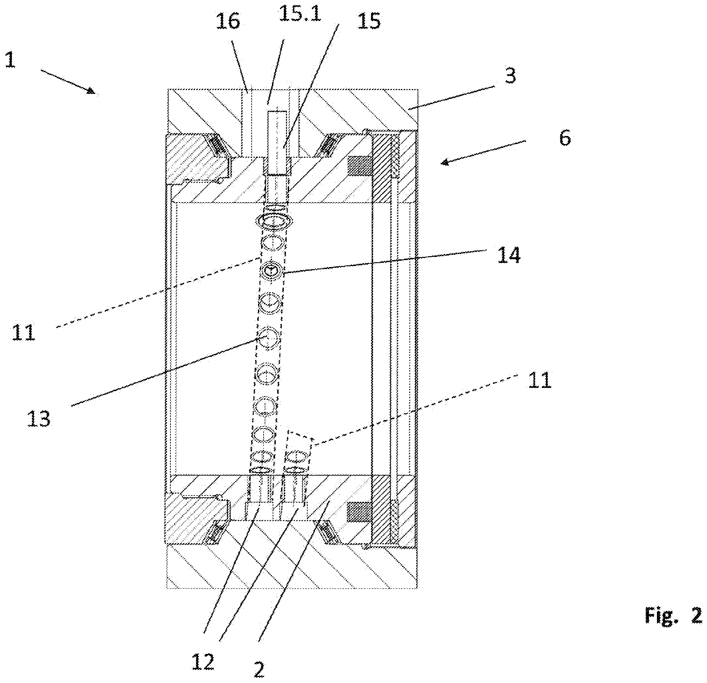

Auch die Fig. 2 gezeigte Drehverbindung 1 ist mit einer Bremseinrichtung 6 versehen, die für eine gegenseitige, temporäre Festlegung des Lagerinnenrings 2 gegenüber dem Lageraußenring 3 sorgt und welche der Bremseinrichtung 6 gemäß Fig.1 entspricht.

Deutlich ist der Darstellung gemäß Fig. 2 entnehmbar, dass am Lagerinnenring 2 eine spiralförmige Laufbahn 11 ausgebildet ist. Bei der in Fig. 2 gewählten Schnittdarstellung ist dies insbesondere am in der Fig. unteren Teil des Lagerinnenrings 2 sichtbar, wo zwei Abschnitte 12 der an sich einläufigen Laufbahn 11 einander in axialer Richtung nebengeordnet sind.

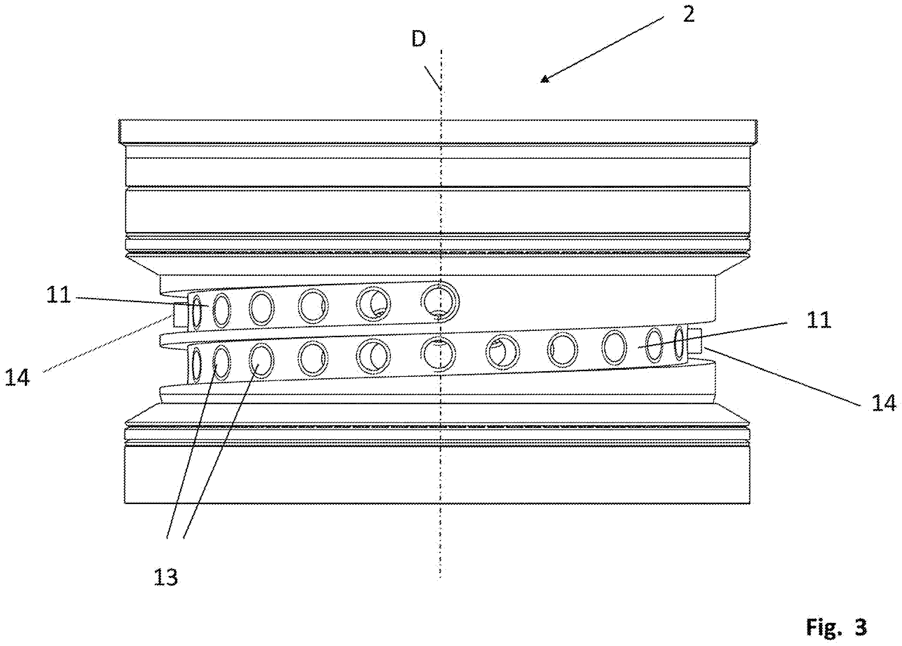

Besonders deutlich wird die spiralförmige Ausbildung der Laufbahn 11 auch in Fig. 3, welche einen Lagerinnenring 2 gemäß Fig. 2 in Seitenansicht zeigt. Dort wird auch sichtbar, dass sich bei der axialen Erstreckung der spiralförmigen Ausbildung der einläufigen Laufbahn 11 mit Blick in Richtung der Drehachse D die Laufbahn 11 zumindest teilweise überdeckt.

Wie Fig. 2 weiter veranschaulicht münden in die Laufbahn 10 eine Mehrzahl von Bohrungen, die als Gewindebohrungen 13 ausgebildet sind. In eine dieser Gewindebohrungen 13 ist ein Anschlag 14 in der Form eines Gewindestifts eingeschraubt. Die Länge diese Gewindestifts ist so bemessen, dass dieser im eingeschraubten Zustand bis in die Laufbahn 11 ragt (in Fig. 2 nicht gezeigt). Nur der Vollständigkeit halber sei darauf hingewiesen, dass noch ein weiterer Anschlag 14 in der Form eines Gewindestifts vorhanden ist, der allerdings wegen der Schnittdarstellung in Fig. 2 nicht sichtbar ist.

In die Laufbahn 11 greift ferner noch eine mit dem Lageraußenring 3 verbundene Nase 15 ein, die in Fig. 2 auf einem Schnitten 15.1 angeordnet ist. Um zu gewährleisten, dass bei Verdrehung von Lageraußenring 3 und Lagerinnenring 2 die Nase 15 bzw. der Schlitten 15.1 dem von der sich in axialer Richtung erstreckenden spiralförmigen Laufbahn 11 vorgegebenen Weg folgen kann, ist die Nase 15 bzw. der Schlitten 15.1 in einer Führung 16 angeordnet, welche die Nase 15 bzw. den Schlitten in axialer Richtung im Lageraußenring 3 verschiebbar stellt.

Auch wenn die Ausführungsbeispiele immer Drehverbindungen 1 mit einer Bremseinrichtungen 6 zeigen, ist diese Bremseinrichtung 6 nicht zwingend erforderlich. Vielmehr kann in einem anderen, nicht dargestellten Ausführungsbeispiel die spiralförmige Laufbahn 11 auch in einer Drehverbindung eingesetzt werden, die keine Bremseinrichtung 6 aufweist.

Drehverbindungen 1 entsprechend der Erfindung können besonders vorteilhaft in der Medizintechnik etwa zur drehbaren Halterung von Patientenliegen oder Deckenstativen eingesetzt werden.

### Bezugszeichenliste

- 1: Drehverbindung
- 2: Lagerinnenring
- 3: Lageraußenring
- 4: Wälzkörper
- 5.1, 5.2: Stirnseite
- 6: Bremseinrichtung
- 7: Bremsscheibe
- 8: Bremsklotz
- 9: Feder
- 10: Elektromagnet
- 11: Laufbahn
- 12: Abschnitt
- 13: Gewindebohrung
- 14: Anschlag
- 15: Nase
- 15.1: Schlitten
- 16: Führung

## Patentansprüche

1. Drehverbindung (1) mit einem Lagerinnenring (2), einem Lageraußenring (3) und Wälzkörpern (4), die zwischen den Lagerringen (2, 3) abrollen, sowie mit einer Wegbegrenzung, die das gegenseitige Verdrehen des Lageraußenrings (3) gegenüber dem Lagerinnenring (2) begrenzt und eine sich spiralförmig in Richtung der Drehachse D der Drehverbindung (1) erstreckende Laufbahn (11) mit ein oder zwei Anschlägen (14) und eine Nase (15) umfasst, welche in die Laufbahn (11) zwischen den Anschlägen (14) hineinragt, **dadurch gekennzeichnet, dass** die Laufbahn (11) mit einer Mehrzahl von Gewindebohrungen (13) versehen ist und die Anschläge (14) in die Gewindebohrungen (13) einschraubbar sind.

2. Drehverbindung (1) nach Anspruch 1, **dadurch gekennzeichnet, dass** der Lagerinnenring (2) und der Lageraußenring (3) jeweils zwei Stirnseiten (5.1, 5.2) aufweisen, wobei an zwei, in die gleiche Richtung weisenden Stirnseiten (5.1, 5.2) von Lagerinnenring (2) und Lageraußenring (3) eine die gegenseitige Verdrehung ausschließende Bremseinrichtung (6) vorgesehen ist, wobei der eine Lagerring (3) mit einer Bremsscheibe (7) und der andere Lagerring (2) mit einem in axialer Richtung gegen die Bremsscheibe (7) verschiebbaren Bremsklotz (8) versehen ist.

3. Drehverbindung (1) nach einem der Ansprüche 1 bis 2, **dadurch gekennzeichnet, dass** die Drehverbindung (1) eine solche für eine Medizinanwendung ist.

## Claims

1. Slewing ring (1) having a bearing inner ring (2), a bearing outer ring (3) and rolling bodies (4) which roll between the bearing rings (2, 3), and having a travel limiting means which limits the mutual rotation of the bearing outer ring (3) with respect to the bearing inner ring (2) and comprises a raceway (11) which extends spirally in the direction of the rotational axis D of the slewing ring (1), with one or two stops (14) and a lug (15) which protrudes into the raceway (11) between the stops (14), **characterized in that** the raceway (11) is provided with a plurality of threaded bores (13), and the stops (14) can be screwed into the threaded bores (13).

2. Slewing ring (1) according to Claim 1, **characterized in that** the bearing inner ring (2) and the bearing outer ring (3) have in each case two end sides (5.1, 5.2), a braking device (6) which rules out the mutual rotation being provided on two end sides (5.1, 5.2) of the bearing inner ring (2) and the bearing outer ring (3) which point in the same direction, wherein the one bearing ring (3) is provided with a brake disc (7) and the other bearing ring (2) is provided with a brake pad (8) which can be moved in the axial direction against the brake disc (7).

3. Slewing ring (1) according to either of Claims 1 and 2, **characterized in that** the slewing ring (1) is for a medical application.

## Revendications

1. Assemblage rotatif (1) comprenant une bague de palier interne (2), une bague de palier externe (3) et des corps de roulement (4) qui roulent entre les bagues de palier (2, 3), ainsi qu'une limitation de course qui limite la rotation de la bague de palier externe (3) par rapport à la bague de palier interne (2) et qui comprend un chemin de roulement (11) s'étendant en spirale dans la direction de l'axe de rotation (D) de l'assemblage rotatif (1) avec une ou deux butées (14) et un ergot (15) qui pénètre dans le chemin de roulement (11) entre les butées (14), **caractérisé en ce que** le chemin de roulement (11) est pourvu d'une pluralité d'alésages filetés (13) et les butées (14) peuvent être vissées dans les alésages filetés (13).

2. Assemblage rotatif (1) selon la revendication 1, **caractérisé en ce que** la bague de palier interne (2) et la bague de palier externe (3) présentent chacune deux côtés frontaux (5.1, 5.2), un système de freinage (6) empêchant la rotation mutuelle étant prévu au niveau de deux côtés frontaux (5.1, 5.2) de la bague de palier interne (2) et de la bague de palier externe (3) tournés dans la même direction.

3. Assemblage rotatif (1) selon l'une quelconque des revendications 1 et 2, **caractérisé en ce que** l'assemblage rotatif (1) sert à un usage médical.
